# EUROPÄISCHE PATENTSCHRIFT

(11) **EP 0 868 619 B1**
(45) Veröffentlichungstag und Bekanntmachung des Hinweises auf die Patenterteilung: **28.03.2001**
(21) Anmeldenummer: 96939060.8
(22) Anmeldetag: 15.11.1996
(51) Int. Cl.: F16K 1/44

(54) **VORRICHTUNG ZUM ANTRIEB FÜR DOPPELSITZVENTILE**
DEVICE FOR THE DRIVE SYSTEM FOR DOUBLE SEAT VALVES
DISPOSITIF DE COMMANDE POUR SOUPAPE A DOUBLE SIEGE

(30) Priorität: 20.12.1995 DE 19547605
(43) Veröffentlichungstag der Anmeldung: 07.10.1998
(73) Patentinhaber: TUCHENHAGEN GmbH, 21514 Büchen (DE)
(72) Erfinder: COURA, Herbert, Robert, D-21514 Büchen (DE); SCHREIBER, Jürgen, D-23909 Ratzeburg (DE)
(74) Vertreter: Glaeser, Joachim, Dipl.-Ing.
(86) Internationale Anmeldenummer: EP9605031
(87) Internationale Veröffentlichungsnummer: WO9722821

(56) Entgegenhaltungen:
- DE-A- 3 005 329
- DE-A- 3 108 973
- DE-A- 3 133 273
- DE-A- 4 236 464

## Beschreibung

Die Erfindung betrifft eine Vorrichtung zum Antrieb für Doppelsitzventile mit zwei unabhängig voneinander bewegbaren Schließgliedern nach dem Oberbegriff des Anspruches 1.

Eine Vorrichtung zum Antrieb für Doppelsitzventile der gattungsgemäßen Art ist durch die Firmendruckschrift UNIVENT Doppeldicht-Ventil TYP 916, GEA AHLBORN, Sarstedt, bekannt. Es handelt sich hierbei um eine raumsparende Antriebsvorrichtung, bei der die Hauptverstelleinrichtung und die Einzelverstelleinrichtungen in einem gemeinsamen Antriebsgehäuse zusammengefaßt sind, jedoch bietet die bekannte Lösung aufgrund der vorgeschlagenen Kolbenanordnungen grundsätzlich nicht die Möglichkeit, im Bedarfsfall von außen einstellbare Teilhubbegrenzungen für beide Schließglieder vorzusehen.

Der vorstehend erwähnte Stand der Technik wurde dahingehend weiterentwickelt, daß zwischen dem Antriebsgehäuse und dem Ventilgehäuse des Doppelsitzventiles eine sogenannte Laterne vorgesehen ist, die es erlaubt, bei ansonsten unveränderter Kolbenanordnung in der Hauptverstelleinrichtung und in den Einzelverstelleinrichtungen zumindest eine Teilhubbegrenzung für das abhängig angetriebene Schließglied vorzusehen. Da der Kolben der Einzelverstelleinrichtung für das unabhängig angetriebene Schließglied zwischen der Hauptverstelleinrichtung und der Einzelverstelleinrichtung für das abhängig angetriebene Schließglied vorgesehen ist, entzieht er sich der Möglichkeit, für ihn eine von außen einstellbare Teilhubbegrenzung vorzusehen. Der letztgenannte Stand der Technik ist durch Firmenunterlagen der Cherry-Byrell Corporation, Cedar Rapids, lowa, USA, belegt.

Um die Möglichkeit zu schaffen, von außen einstellbare Teilhubbegrenzungen für beide Schließglieder vorzusehen, wurde vorgeschlagen, die Verstellstange des unabhängig angetriebenen Schließgliedes durch die Hauptverstelleinrichtung hindurch nach außen zu führen und dort auf einer dem Ventilgehäuse des Doppelsitzventiles abgewandten Seite der Antriebsvorrichtung die erforderliche Einzelverstelleinrichtung anzuordnen (DE 30 05 329 C2). Eine derartige Antriebsvorrichtung unterscheidet sich nicht nur grundsätzlich von der Vorrichtung der gattungsgemäßen Art, sie ist darüber hinaus auch weniger raumsparend und insbesondere aufwendiger zu montieren.

Bei einer durch die DE 31 08 973 C2 bekannt gewordenen Steuereinrichtung für Doppelsitzventile werden beide Verstellstangen durch die Hauptverstelleinrichtung nach oben herausgeführt und dort mit der jeweils zugeordneten Einzelverstelleinrichtung verbunden. Zwar besteht bei dieser bekannten Antriebsvorrichtung die Möglichkeit, von außen und von einer Seite der Antriebsvorrichtung einstellbare Teilhubbegrenzungen für beide Schließglieder vorzusehen, jedoch ist die gesamte Antriebsvorrichtung sehr aufwendig in ihrem Aufbau und ausladend in ihren Abmessungen, da die Einzelverstelleinrichtungen nicht integrativ im Gehäuse der Hauptverstelleinrichtung, sondern additiv an diesem über ein zwischengeschaltetes Laternengehäuse angeordnet sind. Darüber hinaus ist ein deutlich höherer Montageaufwand erforderlich, als dies bei integrativen Antriebslösungen der Fall ist.

Aus der DE 31 33 273 A1 ist ein reinigbares Doppelsitzventil mit Leckkontrolle bekannt, bei dem beide Ventilteller einzeln und voneinander unabhängig in Teiloffenstellungen überführt werden können. Hierzu besitzt das Doppelsitzventil unterhalb einer den Vollhub erzeugenden Hauptverstelleinrichtung eine weitere Verstelleinrichtung, die in einem einzigen Gehäuse durch Kolben voneinander getrennte und begrenzte, gesondert ansteuerbare Zylinderräume aufweist. Auch diese gesamte Antriebsvorrichtung ist sehr ausladend in ihrem Aufbau, da die Einzelverstelleinrichtungen nicht integrativ im Gehäuse der Hauptverstelleinrichtung, sondern additiv zwischen der Hauptverstelleinrichtung und einem mit dem Ventilgehäuse verbundenen Laternengehäuse vorgesehen sind. Einstellbare Teilhubbegrenzungen sind nicht vorgesehen. Sie sind aber prinzipiell möglich, jedoch am kleineren Ventilteller nur dadurch, daß die mit diesem verbundene Ventilstange durch die Hauptverstelleinrichtung hindurchgeführt und oberhalb letzterer mit einer einstellbaren Teilhubbegrenzung versehen wird.

Es ist Aufgabe der vorliegenden Erfindung, die Vorrichtung der gattungsgemäßen Art montagefreundlich und raumsparend auszubilden, wobei die Möglichkeit gegeben sein soll, von außen einstellbare Teilhubbegrenzungen für beide Schließglieder vorzusehen.

Die Aufgabe wird durch die Merkmale des Anspruches 1 gelöst. Vorteilhafte Ausgestaltungen der vorgeschlagenen Vorrichtung sind Gegenstand weiterer Unteransprüche.

Die vorgeschlagene Vorrichtung ist raumsparend, da sie eine Hauptverstelleinrichtung und den jeweiligen Schließgliedern zugeordneten Einzelverstelleinrichtungen in einem gemeinsamen Antriebsgehäuse aufweist. Durch die vorgeschlagene Kolbenanordnung der Einzelverstelleinrichtungen ist es darüber hinaus nunmehr möglich, auf denkbar einfache Weise über ein Laternengehäuse, das das Antriebs- mit dem Ventilgehäuse verbindet, einen Zugriff zu den Kolben der Einzelverstelleinrichtungen und damit im Bedarfsfall die Möglichkeit zu schaffen, von außen einstellbare Teilhubbegrenzungen für beide Schließglieder vorzusehen. Dies geschieht gemäß einer vorteilhaften Ausgestaltung der vorgeschlagenen Vorrichtung dadurch, daß die zur Teilhubbegrenzung der Schließglieder jeweils vorgesehene Anschlagposition der Kolben relativ zur jeweiligen Verstellstange auf dieser von der Außenseite der Antriebsvorrichtung im Bereich eines letztere mit dem Ventilgehäuse verbindenden Laternengehäuses veränderbar ist. Eine weitere vorteilhafte Ausführungsform sieht in diesem Zusammenhang vor, daß die jeweilige Anschlagposition der Kolben mittels in axialer Richtung einander durchdringende Anschlaghülsen bestimmt ist, durch die die konzentrisch zueinander angeordneten Verstellstangen hindurchgeführt sind, wobei die äußere Anschlaghülse im Antriebsgehäuse und die innere Anschlaghülse in der äußeren jeweils verstell- und festlegbar angeordnet sind.

Die vorgeschlagene Vorrichtung wird besonders montagefreundlich, wenn das Antriebsgehäuse in ein erstes und ein zweites Gehäuseteil geteilt ist, wobei das erste die Hauptverstelleinrichtung und das zweite die Einzelverstelleinrichtungen aufnehmen. Auf diese Weise gelingt es, zunächst die Hauptverstelleinrichtung im ersten und die beiden Einzelverstelleinrichtungen im zweiten Gehäuseteil vorzumontieren und beide Gehäuseteile lediglich noch gegen die einfach zu beherrschende und zwischen den beiden Schließgliedern wirkende Kraft, die über eine zweite Feder im Antriebsgehäuse bereitzustellen ist, zusammenzufügen.

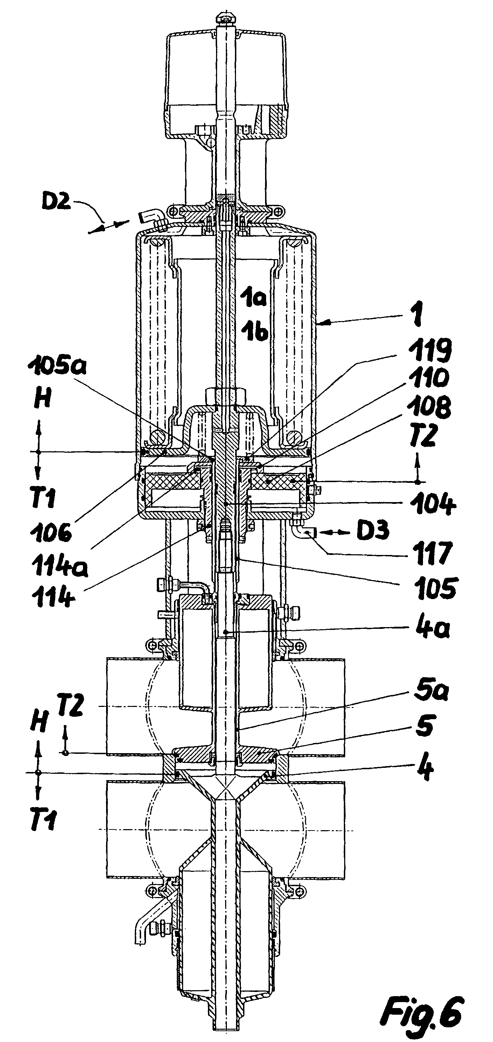

Die vorgeschlagene Vorrichtung bietet darüber hinaus den Vorteil, daß durch einfache Modifikation einiger weniger untergeordneter Teile eine Antriebsvorrichtung entsteht, die sich zum Antrieb für Doppelsitzventile mit zwei unabhängig voneinander bewegbaren Schließgliedern eignet, von denen das unabhängig angetriebene als Schieberkolben mit radialen Dichtungsmitteln und das abhängig angetriebene als Sitzteller ausgebildet sind. Diese Schließgliedkonfiguration erfordert zum einen für das unabhängig angetriebene, schieberartig ausgebildete Schließglied eine Teiloffenstellung T1, die entgegen dem Öffnungshub H des Doppelsitzventils gerichtet ist und zum anderen eine in Richtung des Öffnungshubes H orientierte Teiloffenstellung T2 des abhängig angetriebenen und als Sitzteller ausgebildeten Schließgliedes. Eine diesbezügliche Antriebsvariante wird nachstehend kurz erläutert (siehe Beschreibung zu Figur 6).

Ein Ausführungsbeispiel der vorgeschlagenen Vorrichtung gemäß Erfindung ist in der Zeichnung dargestellt und wird nachfolgend beschrieben.

Es zeigen:
- Figur 1:: einen Mittelschnitt durch ein Doppel sitzventil mit einer Vorrichtung gemäß der Erfindung in einer bevorzugten Ausführungsform, wobei das Doppelsitzventil in seiner Schließstellung dargestellt ist;
- Figur 2:: eine detaillierte Darstellung der Vorrichtung gemäß Figur 1 im Ausschnitt und im vergrößerten Maßstab;
- Figur 3:: die Vorrichtung gemäß Figur 1 für sich alleine in ihrer zur Offenstellung des Doppelsitzventiles gehörenden Stellung;
- Figur 4:: die Vorrichtung gemäß Figur 3 in einer Stellung, in der das unabhängig angetriebene Schließglied in die Teiloffenstellung T1 überführt ist, und
- Figur 5:: die vorgeschlagene Vorrichtung gemäß Figur 3 in einer Stellung des Doppelventiles, in der sich das abhängig angetriebene Schließglied in der Teiloffenstellung T2 befindet.

Figur 6 zeigt die vorgeschlagene Vorrichtung in einer abgewandelten Ausführungsform, die geeignet ist, ein Doppelsitzventil anzutreiben, bei dem das unabhängig angetriebene Schließglied als Schieber und das abhängig angetriebene als Sitzteller ausgebildet sind.

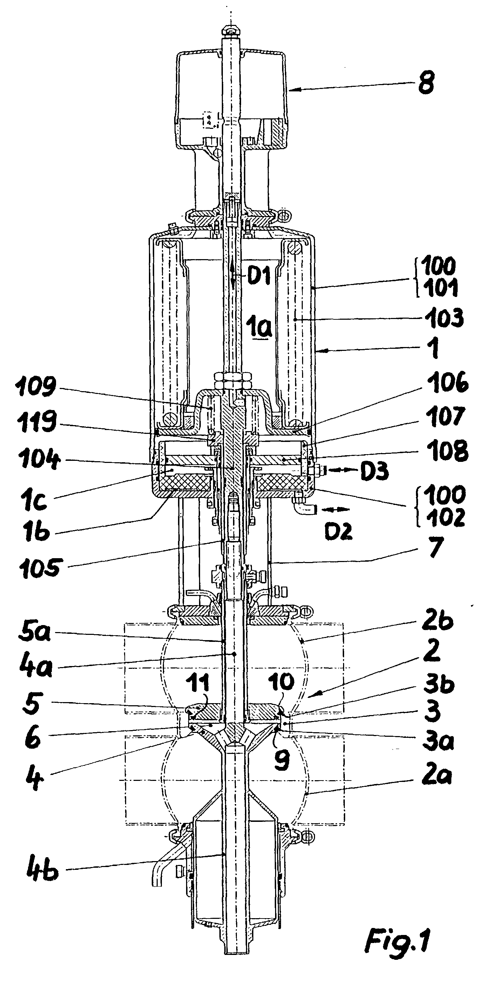

Eine Antriebsvorrichtung 1 (Figur 1) dient dem Antrieb eines Doppelsitzventiles, das im wesentlichen aus einem Ventilgehäuse 2 mit einem ersten und einem zweiten Ventilgehäuseteil 2a bzw. 2b, zwei unabhängig voneinander bewegbaren Schließgliedern 4 und 5 mit den jeweils zugeordneten Verstellstangen 4a bzw. 5a, einem das Ventilgehäuse 2 mit der Antriebsvorrichtung 1 verbindenden Laternengehäuse 7 sowie einem Rückmeldegehäuse 8 für die Überwachung einzelner Stellungen des Doppelsitzventiles besteht. Die beiden als Sitzteller ausgebildeten Schließglieder 4 und 5 mit einer zugeordneten Sitzdichtung 9 bzw. 10 bilden sowohl in der Schließ- als auch in der Offenstellung des Doppelsitzventils zwischen sich einen Leckagehohlraum 6, der in der Offenstellung des Doppelsitzventiles gegenüber seiner Umgebung über eine Dichtung 11 abgedichtet und über ein am unabhängig angetriebenen Schließglied 4 angeordnetes, durch das erste Ventilgehäuseteil 2a hindurchgeführtes Ablaufrohr 4b mit der Umgebung des Doppelsitzventils verbunden ist. An einem Sitzring 3 ist für das erste Schließglied 4 eine erste Sitzfläche 3a und für das zweite Schließglied 5 eine zweite Sitzfläche 3b ausgebildet.

Der Antriebsvorrichtung 1 kommt zum einen die Aufgabe zu, das Doppelsitzventil aus seiner Schließstellung in seine Offenstellung und umgekehrt zu überführen. Hierzu ist in einem gemeinsamen Antriebsgehäuse 100, welches beispielsweise aus einem ersten und zweiten Gehäuseteil 101 bzw. 102 bestehen kann, eine Hauptverstelleinrichtung la vorgesehen, die in an sich bekannter Weise im wesentlichen aus einem von einer Hauptfeder 103 beaufschlagten Hauptkolben 106 sowie einer ersten Druckmittelzuführung Dl besteht. Der Hauptkolben 106 ist entweder unmittelbar oder, wie im dargestellten Ausführungsbeispiel, mittelbar über eine Ventilstange 104 mit der inneren Verstellstange 4a fest verbunden. Die als Hohlstange ausgebildete äußere Verstellstange 5a des zweiten Schließgliedes 5 ist unmittelbar oder, wie es das Ausführungsbeispiel zeigt, mittelbar über eine Hohlstange 105 in die Antriebsvorrichtung 1 hineingeführt und trägt dort ein Federwiderlager 119 für eine sich andererseits am Hauptkolben 106 abstützende zweite Feder 109. In der dargestellten Schließstellung des Doppelsitzventils drückt die vorgespannte Hauptfeder 103 das erste Schließglied 4 auf seine erste Sitzfläche 3a, und die zweite Feder 109 sorgt für eine Anpressung des zweiten Schließgliedes 5 auf der zweiten Sitzfläche 3b.

Desweiteren sind in der Antriebsvorrichtung 1 im zweiten Gehäuseteil 102 zwei Einzelverstelleinrichtungen 1b und 1c vorgesehen, wobei letztere mit ihrem Kolben 108 der Hohlstange 105 bzw. der äußeren Verstellstange 5a und damit dem unabhängig angetriebenen Schließglied 5 zugeordnet ist. Der Kolben 108 wird von unten über eine dritte Druckmittelzuführung D3 mit Druckmittel beaufschlagt und betätigt. Die Einzelverstelleinrichtung 1b verfügt über einen Kolben 107, der über die Verstellstange 104 bzw. die innere Verstellstange 4a dem unabhängig angetriebenen ersten Schließglied 4 zugeordnet ist. Die Druckmittelbeaufschlagung des Kolbens 107 erfolgt, ebenfalls von unten, über eine zweite Druckmittelzuführung D2.

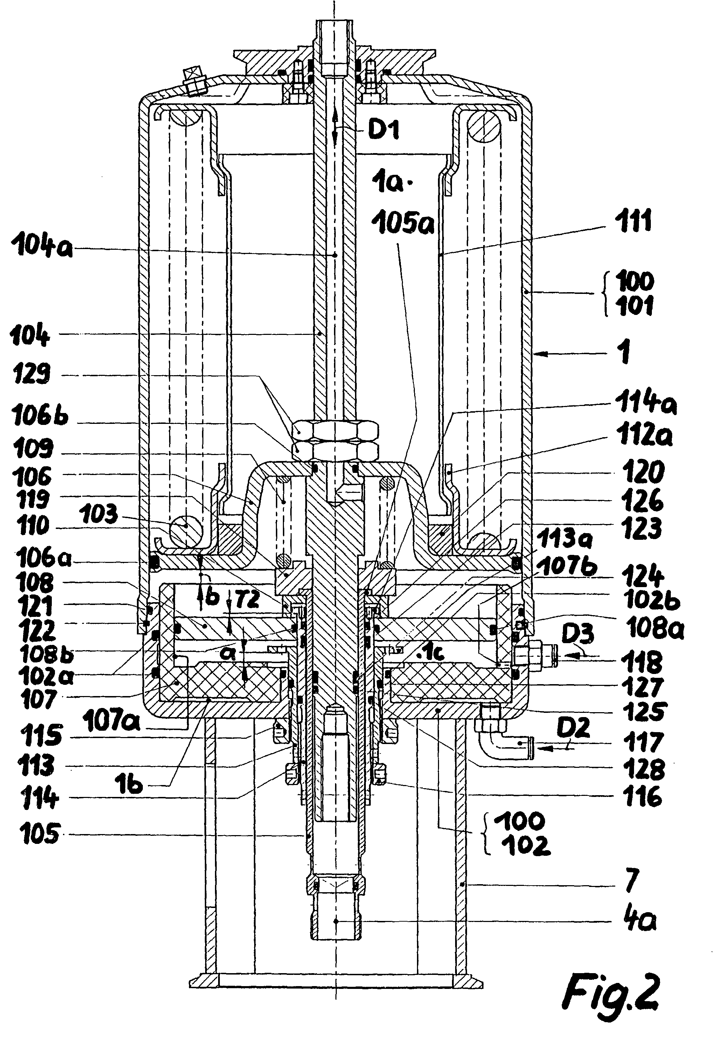

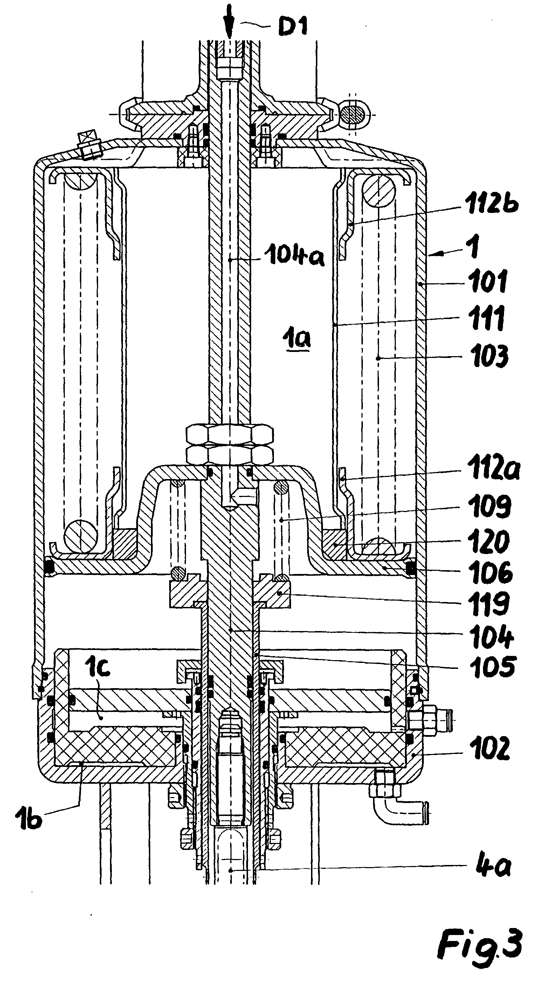

Die Offenstellung des Doppelsitzventils, herbeigeführt durch Druckmittelbeaufschlagung der Hauptverstelleinrichtung 1a, zeigt Figur 3. Zu diesem Zweck wird Druckmittel D1 über eine in der Ventilstange 104 angeordnete Bohrung 104a der Unterseite des Hauptkolbens 106 zugeführt. Letzterer bewegt sich nach oben gegen die Kraft der Hauptfeder 103, bis er über einen Distanzring 120 und ein mittleres Käfigteil 111 an einem nicht näher bezeichneten Kopfteil des ersten Gehäuseteils 101 zur Anlage kommt. Die Hauptfeder 103 befindet sich in einem Käfig, der aus dem mittleren Käfigteil 111 und zwei begrenzt beweglich zu letzterem angeordneten endseitigen Käfigteilen 112a und 112b besteht. Einzelheiten der vorgeschlagenen Antriebsvorrichtung 1, insbesondere mit Blick auf die Einzelverstelleinrichtungen 1b und 1c, sind Figur 2 zu entnehmen.

Der Kolben 107 (Figur 2) ist topfförmig ausgebildet und dichtet außenseits verschieblich im zweiten Gehäuseteil 102 über zwei axial beabstandete äußere Kolbendichtungen 102a und innenseits, gleichfalls noch im zweiten Gehäuseteil 102, und zwar in einem zentrischen Teil, über eine innere Kolbendichtung 102b. Auf seiner der Hauptverstelleinrichtung la zugewandten Seite ist der Kolben 107 mit einer zylindrischen Ausnehmung 107a versehen, in der der Kolben 108, außenseits über eine äußere Kolbendichtung 108a dichtend, verschieblich angeordnet ist. Innenseits gleitet der Kolben 108, abgedichtet über eine innere Kolbendichtung 108b, auf einer inneren Anschlaghülse 114, die ihrerseits von der Hohlstange 105 konzentrisch durchdrungen ist.

Die Druckbeaufschlagung des Kolbens 107 mit dem Druckmittel D2 erfolgt von unten über einen ersten Druckmittelanschluß 117; jene des Kolbens 108 mit dem Druckmittel D3 erfolgt ebenfalls von unten über einen zweiten Druckmittelanschluß 118 und eine den Kolben 107 im unteren Teil der zylindrischen Ausnehmung 107a durchdringende Durchtrittsbohrung 107b. Das den Hauptkolben 106 beaufschlagende Druckmittel D1 wird über die Bohrung 104a in der Ventilstange 104 zugeführt. Der beaufschlagte Raum unterhalb des Hauptkolbens 106 findet seine Abdichtung gegen die Umgebung zum einen über eine gegen die innere Mantelfläche des ersten Gehäuseteils 101 dichtende erste Kolbendichtung 106a, eine zwischen dem Hauptkolben 106 und der Ventilstange 104 unterhalb zweier Kontermuttern 129 angeordnete zweite Kolbendichtung 106b, eine die Gehäuseteile 101 und 102 gegeneinander abdichtende Gehäusedichtung 121, eine zwischen der Ventilstange 104 und der Hohlstange 105 angeordnete Stangendichtung 125, eine zwischen der Hohlstange 105 und der inneren Anschlaghülse 114 vorgesehene Hohlstangendichtung 126 sowie zwei weiteren Dichtungen 127 und 128. Die Dichtung 127 dichtet eine äußere Anschlaghülse 113, die die innere Anschlaghülse 114 konzentrisch umschließt, außenseits gegen das zweite Gehäuseteil 102, und die Dichtung 128 dichtet die äußere Anschlaghülse 113 innenseits gegen die innere Anschlaghülse 114 ab. Mit 123 und 124 sind ein erster bzw. ein zweiter Führungsring bezeichnet, die eine einwandfreie Verschiebung der Hohlstange 105 innerhalb der inneren Anschlaghülse 114 bzw. eine Verschiebung der Ventilstange 104 in der Hohlstange 105 sicherstellen.

Die äußere Anschlaghülse 113 ist über ein Gewinde in dem zweiten Gehäuseteil 102 verstellbar angeordnet und über eine erste Kontermutter 115 gegen dieses festlegbar. In gleicher Weise ist die innere Anschlaghülse 114 in der äußeren 113 verstell- und dort über eine zweite Kontermutter 116 festlegbar.

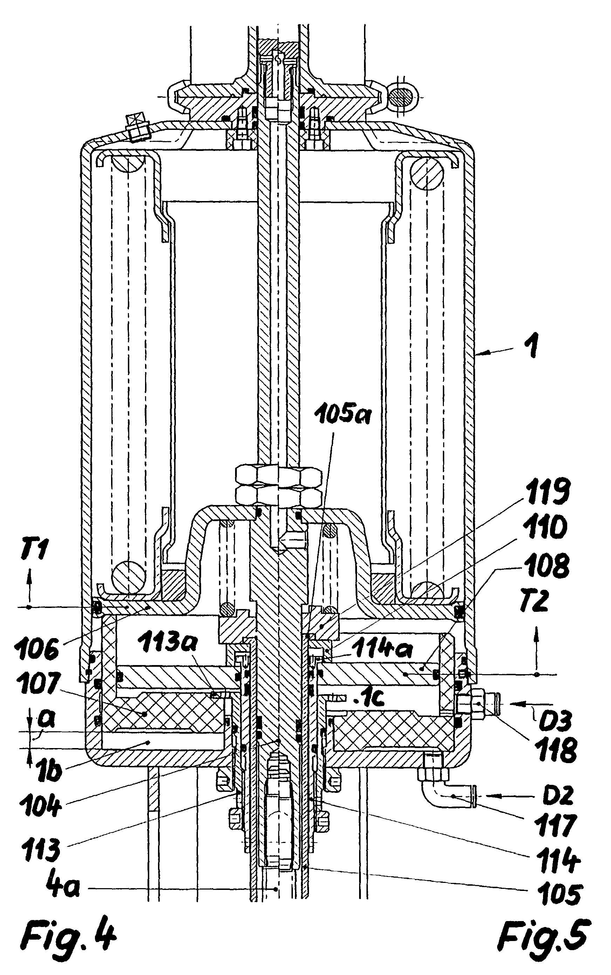

Weiterhin weist die äußere Anschlaghülse 113 einen ersten Rezeß 113a auf, der der Teilhubbegrenzung des Kolbens 107 dient. Wird letzterer um das mit a gekennzeichnete Hubmaß nach oben gegen den ersten Rezeß 113 verschoben, dann gelangt der Kolben 107 nach einer mit b gekennzeichneten Teilhubbewegung an dem Hauptkolben 106 zur Anlage und verschiebt diesen um den Teilhub T1 = a - b, so daß die mit dem Hauptkolben 106 verbundene Ventilstange 104 das zugeordnete unabhängig angetriebene Schließglied 4 in die entsprechende Teiloffenstellung T1 überführt (vergleiche die hierzu gehörende Endstellung des Kolbens 107 in Figur 4). Damit hat sich das Schließglied 4 von seiner zugeordneten ersten Sitzfläche 3a entfernt, und es ist eine sogenannte Sitzreinigung aus dem ersten Ventilgehäuseteil 2a über die freigelegte erste Sitzfläche 3a in den Leckagehohlraum 6 möglich. Das auf diese Weise aus dem ersten Ventilgehäuseteil 2a geerntete Reinigungsmittel fließt aus dem Leckagehohlraum 6 über das Ablaufrohr 4b in die Umgebung des Doppelsitzventiles ab (s. auch Figur 1).

Wird der Kolben 108 auf seiner Unterseite mit Druckmittel D3 beaufschlagt, dann verschiebt er sich nach oben und kommt schließlich an einem zweiten Rezeß 114a am oberen Ende der inneren Anschlaghülse 114 zur Anlage. Der Kolben 108 verschiebt bei seiner Teilhubbegwegung einen Distanzkörper 110, der sich in dieser Bewegungsrichtung in einer formschlüssigen Mitnahmeverbindung mit einem als Rezeß ausgebildeten Hohlstangenkopf 105a der Hohlstange 105 befindet. Dadurch werden die Hohlstange 105 und somit die äußere Verstellstange 5a des abhängig angetriebenen Schließgliedes 5 ebenfalls nach oben verschoben, wodurch sich die entsprechende Teiloffenstellung T2 des Schließgliedes 5 auf der zweiten Sitzfläche 3b ergibt. Die diesbezügliche Endstellung der Antriebsvorrichtung 1 ist aus Figur 5 ersichtlich. In dieser Stellung kann nunmehr Reinigungsmittel aus dem zweiten Ventilgehäuseteil 2b über die freigelegte zweite Sitzflächen 3b in den Leckagehohlraum 6 einströmen und von dort über das Ablaufrohr 4b in die Umgebung des Doppelsitzventils gelangen (vgl. Fig. 1).

Die Montage der vorgeschlagenen Antriebsvorrichtung 1 ist denkbar einfach (s. Figur 2). Da die Ventilstange 104 und die Hohlstange 105 von der zugeordneten inneren Verstellstange 4a bzw. der äußeren Verstellstange 5a getrennt werden können, ist eine komplette Montage der Antriebsvorrichtung 1, losgelöst von dem Doppelsitzventil, möglich. Zunächst kann die Hauptverstelleinrichtung 1a in dem ersten Gehäuseteil 101 vormontiert werden. Das gleiche gilt für die Einzelverstelleinrichtungen 1b und 1c innerhalb des zweiten Gehäuseteiles 102. Sodann werden beide Gehäuseteile 101 und 102 zusammengefügt und über einen Sicherungsring 122 miteinander verbunden. Die Einstellung der Teilhubbegrenzung der Schließglieder 4,5 erfolgt, wenn die Antriebsvorrichtung 1 mit dem Doppelsitzventil verbunden ist und wenn aufgrund des Zusammenspiels aller maßgeblichen Teile und ihrer Toleranzen die erforderlichen Teiloffenstellungen Tl und T2 im Sitzbereich vorgegeben und durch Justierung der äußeren und der inneren Anschlaghülse 113 bzw. 114 determiniert werden können. Die Anschlaghülsen 113, 114 sind jeweils über Feingewinde in den sie aufnehmenden Bauteilen feinfühlig verstell- und über die Kontermuttern 115 und 116 sicher festlegbar.

In Figur 6 ist gezeigt, wie durch einfache Modifizierung der vorgeschlagenen Antriebsvorrichtung 1 ein Doppelsitzventil angetrieben werden kann, dessen unabhängig angetriebenes Schließglied als Schieber mit radialen Dichtungsmitteln und dessen abhängig angetriebenes Schließglied als Sitzteller ausgebildet sind. Bei dieser Schließgliedkonfiguration erfolgt die Teiloffenstellung T1 des Schließgliedes 4 in entgegengesetzter Richtung zum Öffnungshub H. Zur Realisierung der Teiloffenstellung T1 wird der Hauptkolben 106 von oben über einen nicht bezeichneten Druckmittelanschluß mit Druckmittel D2 beaufschlagt. Die Teilhubbegrenzung des Schließgliedes 4 nach unten erfolgt dadurch, daß die Ventilstange 104 über einen nicht näher bezeichneten Rezeß oberhalb des Federwiderlagers 119 an letzterem zur Anlage kommt. Die Teiloffenstellung T2 des anhängig angetriebenen Schließgliedes 5 erfolgt über den Kolben 108, der nunmehr über den ersten Druckmittelanschluß 117 mit Druckmittel D3 beaufschlagt wird. Die Mitnahme der Hohlstange 105 über ihren Hohlstangenkopf 105a sowie die Teilhubbegrenzung des Kolbens 108 über einen zweiten Rezeß 114a an der Anschlaghülse 114 wurden vorstehend bereits erläutert.

## Patentansprüche

1. Vorrichtung zum Antrieb für Doppelsitzventile mit zwei unabhängig voneinander bewegbaren Schließgliedern (4,5), von denen das unabhängig angetriebene (4) nach einem Teilhub am anderen (5) zur Anlage kommt und dieses bei seiner weiteren Öffnungsbewegung gleichfalls in eine Offenstellung überführt und die zusätzlich zu der Offenstellung, unabhängig voneinander, jeweils in eine Teiloffenstellung verbringbar sind, wobei die Vorrichtung aus einer Antriebsvorrichtung (1) besteht, die in einem gemeinsamen Antriebsgehäuse eine Hauptverstelleinrichtung (1a) und den jeweiligen Schließgliedern (4,5) zugeordneten Einzelverstelleinrichtungen (1b, 1c) aufweist, und die Einzelverstelleinrichtungen (1b, 1c) zwischen der Hauptverstelleinrichtung (1a) und dem Ventilgehäuse (2) angeordnet sind und mit Verstellstangen für die Schließglieder (4,5), wobei auf diesen Verstellstangen jeweils ein Kolben (107;108) gelagert ist, der in einer Richtung auf der zugeordneten Verstellstange axial verschieblich ist und der in der entgegengesetzten Richtung zum Eingriff in eine Mitnahmeverbindung mit dieser Ventilstange verbringbar ist,
**dadurch gekennzeichnet**,
• daß der Kolben (107) der ersten Einzelverstelleinrichtung (1b) für die Teiloffenstellung (T1) des unabhängig angetriebenen Schließgliedes (4) außenseits im Antriebsgehäuse (100) der Antriebsvorrichtung (1) und
• der Kolben (108) der zweiten Einzelverstelleinrichtung (1c) für die Teiloffenstellung (T2) des abhängig angetriebenen Schließgliedes (5) seinerseits außenseits in einer zylindrischen Ausnehmung (107a) in dem Kolben (107) der ersten Einzelverstelleinrichtung (1b), die der Hauptverstelleinrichtung (1a) zugewandt ist, dichtend verschieblich angeordnet sind.

2. Vorrichtung nach Anspruch 1, **dadurch gekennzeichnet**, daß die zur Teilhubbegrenzung der Schließglieder (4,5) jeweils vorgesehene Anschlagposition der Kolben (107,108) relativ zur jeweiligen Verstellstange (4a bzw. 104, 5a bzw. 105) auf dieser von der Außenseite der Antriebsvorrichtung (1) im Bereich eines letztere mit dem Ventilgehäuse (2) verbindenden Laternengehäuses (7) veränderbar ist.

3. Vorrichtung nach Anspruch 2, **dadurch gekennzeichnet**, daß die jeweilige Anschlagposition der Kolben (107, 108) mittels in axialer Richtung einander durchdringende Anschlaghülsen (113, 114) bestimmt ist, durch die die konzentrisch zueinander angeordneten Verstellstangen (4a bzw. 104, 5a bzw. 105) hindurchgeführt sind, wobei die äußere Anschlaghülse (113) im Antriebsgehäuse (100) und die innere Anschlaghülse (114) in der äußeren (113) jeweils verstell- und festlegbar angeordnet sind.

4. Vorrichtung nach einem der Ansprüche 1 bis 3, **dadurch gekennzeichnet**, daß das Antriebsgehäuse (100) in ein erstes und ein zweites Gehäuseteil (101 bzw. 102) geteilt ist, wobei das erste (101) die Hauptverstelleinrichtung (1a) und das zweite (102) die Einzelverstelleinrichtungen (1b, 1c) aufnehmen.

## Claims

1. Device for driving a double-seat valve with two closing elements (4, 5) that can move independently of one another, of which the independently driven element (4) comes in contact with the other element (5) after a partial stroke and, during its continued opening movement, at the same time moves the latter too into an open position and which can, in addition to the open position, also each be brought independently of one another to a partially open position, such that the device consists of a drive mechanism (1) comprising in a common housing a main displacement device (la) and individual displacement devices (1b, 1c) associated with the respective closing elements (4, 5), and the individual displacement devices (1b, 1c) are arranged between the main displacement device (la) and the valve housing (2) and comprise displacement rods for the closing elements (4, 5), and on these displacement rods in each case a piston (107, 108) is fitted, which can be moved axially in one direction on its associated displacement rod and which, in the opposite direction, can be brought into coupled engagement with this valve rod,
**characterised in that**
• the piston (107) of the first individual displacement device (1b) for the partially open position (T1) of the independently driven closing element (4) is arranged and can move to form a seal on the outside in the drive housing (100) of the drive mechanism (1) and
• the piston (108) of the second individual displacement device (1c) for the partially open position (T2) of the dependently driven closing element (5), for its part, is arranged and can move to form a seal on the outside in a cylindrical recess (107a) in the piston (107) of the first individual displacement device (1b), which faces towards the main adjustment device (1a).

2. Device according to Claim 1,
**characterised in that**
the abutment position of the piston (107, 108) provided in each case to limit the partial stroke of the closing elements (4, 5) relative to the respective displacement rod (4a and 104, 5a and 105 respectively) can be altered on this from outside the drive mechanism (1) in the area of a lantern housing (7) which connects the latter to the valve housing (2).

3. Device according to Claim 2,
**characterised in that**
the respective position of the piston (107, 108) is determined by abutment sleeves (113, 114) which pass one through the other in the axial direction, through which the displacement rods (4a and 104, 5a and 105 respectively) are guided concentrically to one another, such that the outer abutment sleeve (113) is arranged in the drive housing (100) and the inner abutment sleeve (114) is arranged in the outer one (113), in each case so that they can be adjusted and fixed in position.

4. Device according to any of Claims 1 to 3,
**characterised in that**
the drive housing (100) is divided into a first and a second housing portion (101 and 102 respectively), and the first portion (101) holds the main displacement device (la) while the second portion (102) holds the individual displacement devices (1b, 1c).

## Revendications

1. Dispositif pour commander des soupapes à double siège avec deux éléments de fermeture (4,5) qui peuvent être déplacés indépendamment l'un de l'autre, parmi lesquels celui qui est commandé indépendamment (4) vient prendre appui sur l'autre (5) après une course partielle et l'amène au cours de la suite de son mouvement d'ouverture également en une position ouverte et qui, en plus de la position ouverte, peuvent être respectivement amenés, indépendamment l'un de l'autre, dans une position semi-ouverte, ce dispositif se composant d'un mécanisme de commande (1) qui présente, dans un carter commun du mécanisme de commande, un dispositif de réglage principal (la) et les dispositifs de réglage individuels (lb,lc) correspondant aux éléments de fermeture respectifs (4,5), et étant montés entre le dispositif de réglage principal (la) et la cage de soupape (2) et équipés de tiges de réglage pour les éléments de fermeture (4,5), les tiges de réglage respectives recevant un piston (107,108) qui peut être déplacé axialement dans un sens sur la tige de réglage correspondante et qui peut être amené, dans le sens opposé, dans un assemblage d'entraînement pour être mis en prise avec cette tige de soupape,
caractérisé en ce que
le piston (107) du premier dispositif de réglage individuel (1b) pour la position d'ouverture partielle (T1) de l'élément de fermeture commandé indépendamment (4) est monté de manière mobile et étanche du côté extérieur dans le carter du mécanisme de commande (100) du dispositif de commande (1) et
le piston (108) du second dispositif de réglage individuel (1c) pour la position d'ouverture partielle (T2) de l'élément de fermeture à commande dépendante (5) est pour sa part monté de manière mobile et étanche du côté extérieur dans un logement cylindrique (107a) dans le piston (107) du premier dispositif de réglage individuel (1b), qui est orienté vers le dispositif de réglage principal (1a).

2. Dispositif selon la revendication 1, caractérisé en ce que la position d'arrêt des pistons (107,108) prévue respectivement pour limiter la course partielle des éléments de fermeture (4,5) par rapport à la tige de réglage correspondante (4a ou 104, 5a ou 105) peut être modifiée sur celle-ci depuis le côté extérieur du dispositif de commande (1) au niveau d'un carter de lanterne (7) reliant ce dernier à la cage de soupape (2).

3. Dispositif selon la revendication 2, caractérisé en ce que la position d'arrêt respective des pistons (107, 108) est déterminée au moyen de douilles de butée (113, 114) pénétrant l'une dans l'autre dans le sens axial, à l'intérieur desquelles on fait passer les tiges de réglage (4a ou 104, 5a ou 105)disposées de façon concentrique l'une par rapport à l'autre, la douille de butée extérieure (113) et la douille de butée intérieure étant respectivement montées de manière réglable et fixable dans le carter du mécanisme de commande (100) et dans la douille de butée extérieure (113).

4. Dispositif selon l'une quelconque des revendications 1 à 3, caractérisé en ce que le carter du mécanisme de commande (100) est divisé en une première et une deuxième partie de carter (101 et 102), la première (101) recevant le dispositif de réglage principal (la) et la deuxième les dispositifs de réglage individuels (1b, 1c).
